# EUROPEAN PATENT APPLICATION

(11) **EP 4 730 700 A1**
(43) Date of publication of application: **22.04.2026**
(21) Application number: 24207555.4
(22) Date of filing: 18.10.2024
(51) Int. Cl.: H04L 9/40, H04W 12/0431, H04W 12/069

(54) **A DEVICE, A SERVER AND A METHOD FOR PERFORMING SERVICE ACTIVATION OF A VEHICLE-RELATED SERVICE**

(71) Applicant: Bayerische Motoren Werke Aktiengesellschaft, 80809 München (DE)
(72) Inventor: Fink, Matthias, 81541 München (DE)

(57) **Abstract**

The present document describes a digital key device (110) comprising a digital key (111) which is adapted for authentication of the digital key device (110) at a vehicle (100). The digital key device (110) is configured to determine identification data regarding the identity of the service provider for a digital key-based service for the vehicle (100), and to provide the identification data directly to a vehicle server (140) which is configured to track one or more shared digital keys (161) that have been derived from the digital key (111) of the digital key device (110). Furthermore, the digital key device (110) is configured to send a service activation request to a service server (160) for providing the digital key-based service using a shared digital key (161) that is derived from the digital key (111) of the digital key device (110), wherein the shared digital key (161) is adapted for authentication at the vehicle (100), and wherein the service activation request comprises the identification data.

## Description

The present document is directed at enabling a digital key-based service for a vehicle.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with a service provider, notably with a server of a service provider, for enabling the service provider to provide a vehicle-related service using a shared digital key. Example services are a valet parking service of the vehicle or a maintenance service for maintaining the vehicle. A vehicle-related service which involves the use of a shared digital key may be referred to as a digital key-based service.

The present document is directed at performing service activation of a digital key-based service in a reliable and secure manner. The technical problem is solved by each one of the independent claims. Preferred examples are specified in the dependent claims.

According to an aspect, a digital key device comprising a digital key which is adapted for authentication of the digital key device at a vehicle is described, wherein the digital key device is configured to determine identification data regarding the identity of a service provider for a digital key-based service for the vehicle, and to provide the identification data directly to a vehicle server which is configured to track one or more shared digital keys that have been derived from the digital key of the digital key device. Furthermore, the digital key device is configured to send a service activation request to a service server for providing the digital key-based service using a shared digital key that is derived from the digital key of the digital key device, wherein the shared digital key is adapted for authentication at the vehicle, and wherein the service activation request comprises the identification data.

According to a further aspect, a vehicle server for managing one or more shared digital keys that are derived from a digital key of a digital key device is described, wherein the digital key and the one or more shared digital keys are adapted for authentication at a vehicle. The vehicle server is configured to receive first identification data regarding the identity of a service provider for a digital key-based service for the vehicle directly from the digital key device, and to receive a request for provision of a shared digital key to a service server for providing the digital key-based service, wherein the request comprises second identification data regarding the identity of the service provider for the digital key-based service. Furthermore, the vehicle server is configured to compare the first identification data and the second identification data, and to enable the provision of the shared digital key to the service server in dependence of the comparison of the first identification data and the second identification data, in particular if (the comparison shows that) the first identification data and the second identification data are indicative of the same service provider.

According to another aspect, a method for performing service activation for a digital key-based service for a vehicle using a digital key which is adapted for authentication at the vehicle is described. The method comprises determining identification data regarding the identity of a service provider for the digital key-based service for the vehicle, and providing the identification data directly to a vehicle server which is configured to track one or more shared digital keys that have been derived from the digital key of the digital key device. Furthermore, the method comprises sending a service activation request to a service server for providing the digital key-based service using a shared digital key that is derived from the digital key of the digital key device, wherein the shared digital key is adapted for authentication at the vehicle and wherein the service activation request comprises the identification data.

According to a further aspect, a method for performing service activation for a digital key-based service for a vehicle using a digital key which is adapted for authentication at the vehicle is described. The method comprises receiving first identification data regarding the identity of a service provider for the digital key-based service for the vehicle, and subsequent to receiving the first identification data, receiving a request for provision of a shared digital key derived from the digital key to a service server for providing the digital key-based service, wherein the request comprises second identification data regarding the identity of the service provider for the digital key-based service. Furthermore, the method comprises comparing the first identification data and the second identification data, and enabling the provision of the shared digital key to the service server in dependence of the comparison of the first identification data and the second identification data, in particular if (it is determined that) the first identification data and the second identification data are indicative of the same service provider.

According to a further aspect, a software program is described. The software program may be adapted for execution on a processor and for performing the method steps of the one or more methods outlined in the present document when carried out on the processor.

According to another aspect, a storage medium is described. The storage medium may comprise a software program adapted for execution on a processor and for performing the method steps of the one or more method steps outlined in the present document when carried out on the processor.

According to a further aspect, a computer program product is described. The computer program may comprise executable instructions for performing the method steps of the one or more methods outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 2 illustrates an example scenario for performing service activation of a digital key-based service; and
Figs. 3a and 3b each show a flow chart of an example method for performing service activation of a digital key-based service.

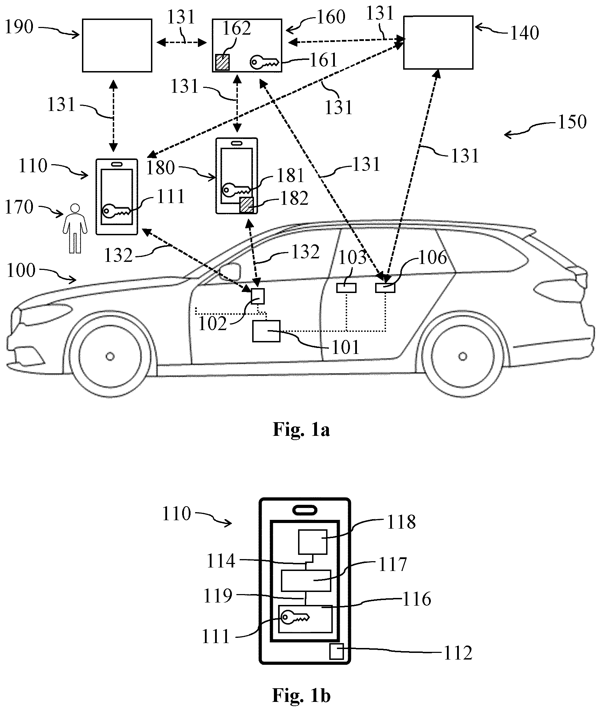

As outlined above, the present document is directed at the technical problem of performing service activation of a digital key based-service for a vehicle (such as a car) in a reliable and secure manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., the secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132. Different communication links 132 may be used for different purposes. In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 132 may be used to provide a short-range communication between the device 110 and the vehicle 100. For establishing the NFC communication link 132, the device 110 may be held in close proximity (e.g. in a distance of less than 10cm) from the communication unit 102 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subject to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 132.

In an example system 150, a BLE communication link 132 may be established between the device 110 and the vehicle 100, once the distance between the device 110 and the vehicle 100 is equal to or less than a first distance threshold. Once the BLE communication link 132 has been established, the device 110 may be authenticated with the vehicle 100 using the digital key 111 of the device 110. Subject to authentication of the device 110, the device 110 may be enabled to send one or more control commands via the communication link 132 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the key applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 112 for establishing a communication link 132 with the vehicle 100.

The user 170 of the device 110 with the digital key 111 may enable another user and/or another electronic device to control one or more vehicle functions 103. For this purpose, the digital key device 110 may cause a shared digital key to be provided to another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) can send a transfer request to the vehicle server 140 via the communication link 131, in order to cause the vehicle server 140 to pass on a shared digital key to the other device (e.g. via a relay server). The transfer request may be signed with the digital key 111 of the digital key device 110. Furthermore, the transfer request may specify a set of the one or more vehicle functions 103 that can be controlled by the digital key.

The vehicle server 140 and/or the digital key device 110 may assign a role and/or entitlements to the receiving device. The receiving electronic device may generate the shared digital key based on the information provided by the vehicle server 140 and/or the digital key device 110. This shared digital key, together with an attestation for this shared digital key, may be passed on to the vehicle 100 and to the other electronic device (in corresponding messages).

In particular, the digital key device 110 may provide information (e.g., the entitlements) which is used for creating a shared digital key to the receiving device. The receiving device may create the shared digital key (with a secret key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to the receiving device (i.e., to the other electronic device). Furthermore, the attestation may be sent to the vehicle 100.

The attestation can be used by the vehicle 100 to check the authenticity of the shared digital key of the other electronic device. For this purpose, the vehicle 100 uses the digital key 111, notably the public key of the digital key 111, of the digital key device 110, from which the sharing of the shared digital key was initiated. The digital key 111 of the device 110 may have been used to signed one or more properties of the shared digital key (such as the entitlements of the shared digital key). Furthermore, a central digital key, notably the public key (PK) of the central digital key, of the vehicle server 140 may be required, with which the attestation for the shared digital key for the other electronic device 120 has been signed. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation 122, the shared digital key can be extracted. The integrity of the attestation may be verified using the (public key of) the vehicle server 140 central digital key and/or the (public key of the) digital key 111 from which the shared digital key was derived.

As an alternative to an owner device 110, a digital key 111 may be owned by a server, e.g., a server for managing a fleet of vehicles, as may be used by a car rental company. A server 160 that owns a digital key 111 to a vehicle 100 may be referred to as a SBOD (Server Based Owner Device). Alternatively, or in addition, a sharer device 110 may share a digital key 111 with a service server 160, wherein a service server 160 with a shared digital key 161 may be referred to as a SBFD (Server Based Friend Device). A SBOD is typically the root element of the sharing tree (i.e. of the key hierarchy) of a digital key 161. When a vehicle 100 is infleeted into a fleet of vehicles, a SBOD may be provided that a rental or fleet provider can interact with to request one or more key sharings (for one or more different electronic devices 180).

A SBFD may be provided by directly or indirectly sharing a digital key 161 with the owner (a natural person or a server) of the digital key 111. In the context of the sharing process, an attestation 162 of the digital key 161 may be generated (and stored on the service server 160 acting as a SBFD). The SBFD may be linked with a service provider, wherein the service provider may interact with the SBFD to trigger a key sharing (based on the digital key 161), e.g. in order to provide a shared digital key 181 to an electronic device 180 of a customer of the service provider (e.g. in case of a car sharing service) or to an electronic device 180 of an employee of the service provider (e.g. in case of a maintenance service). Within the key sharing process an attestation 182 of the shared digital key 181 may be generated.

The process of sharing a digital key 111 to the server of a service provider may be referred to as service activation. An SBFD service may be created by performing a service activation using a so-called service management request. The service management request may be signed by the digital key 111 of the device 110 that performs the service activation. As an alternative to using the service management request, a key sharing process can be performed with a server 160 using the CCC key sharing protocol.

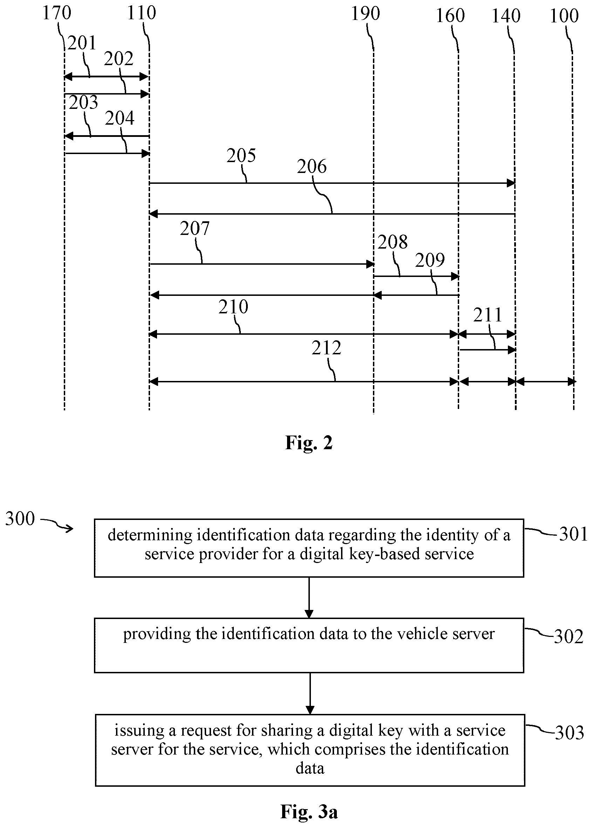

Fig. 2 illustrates a service activation process for a digital key-related service using the CCC key sharing protocol. A software application 118 on the digital key device 110 that holds a digital key 111 to the vehicle 100 for which the service shall be activated may be used. The user 170 may select a service and/or a service provider via a user interface of the digital key device 110 (wherein the user interface may be provided by the software application 118). Furthermore, the digital key 111 may be selected, which is to be shared for providing the vehicle-related (and digital key-based) service (steps 201, 202).

In the context of selecting a vehicle-related (digital key-based) service and/or the service provider for providing the service, identification data may be determined with regards to the identity of the service and/or of the service provider (wherein the service provider may be the legal entity that provides one or more services). The identification data may comprise,
- an identifier for the service provider; and/or
- an identifier for the vehicle-related service.

Furthermore, one or more options regarding the selected service may be selected and/or fixed by the user 170. The one or more service options may have an impact on the privileges which are associated with the shared digital key 161, 181 for the service.

The user interface may comprise a menu which allows the user 170 to select
- the service provider from a pre-determined list of service providers;
- the service from a pre-determined list of services (which are provided by the selected service provider); and/or
- the one or more service options from a pre-determined list of service options (which are available for the selected service).

Subsequent to the process of defining the vehicle-related service, the user 170 may proceed with service activation of the vehicle-related service, e.g. by issuing a service activation command via the user interface of the digital key device 110. The user 170 may be provided with the summary of the defined service via the user interface of the digital device 110 (step 203). Furthermore, the user 170 may be asked to authorize the service activation of the defined service (step 204). Authorization of the defined service may cause the service-related data, notably the identification data and possibly the one or more service options, to be signed using the digital key 111, notably using the private key of the digital key 111.

The digital key device 110 may then request the digital key 111 of the digital key device 110 to be shared with the service server 160 of the selected service provider (in order to cause creation of a shared digital key 161 on the service server 160). For this purpose, a sharing request, notably a CCC preShare request, may be sent to the vehicle server 140 (which is associated with the digital key 111 and/or with the vehicle 100 for which the service is to be provided) (step 205). The sharing request may comprise the (signed) service-related data, notably the (signed) identification data.

The vehicle server 140 may verify the (signed) service-related data using the digital key 111, notably using the public key of the digital key 111. In particular, the digital signature which has been generated by the digital key device 110 for the service-related data may be verified, in order to verify the authenticity of the service-related data, notably of the identification data for identifying the service provider and/or the vehicle-related service. If the validity of the signed (and possibly encrypted) service-related data is confirmed, the service-related data, notably the identification data, may be stored at the vehicle server 140. Furthermore, the vehicle server 140 may inform the digital key device 110 on whether or not the verification has been successful (step 206).

The digital key device 110, notably the secure element 116 of the digital key device 110, may then prepare the sharing process for sharing the digital key 111. In this context a sharing URL (Uniform Resource Locator) on a relay server may be determined. The relay server may be used as an intermediate entity for enabling the service server 160 to create the shared digital key 161 (which is derived as a subordinate key from the digital key 111). The relay server may be configured to create the sharing URL, wherein the sharing URL may point to a mailbox that was created for the key sharing process. The sharing URL may be provided to the software application 118, in order to enable the software application 118 to provide the sharing URL to the service server 160 (of the selected service provider). Hence, the digital key device 110, notably the software application 118, may determine a sharing URL for the shared digital key 161 (wherein the sharing URL was created by the relay server).

The digital key device 110, notably the software application 118, may send a service activation command to the management server 190 of the selected service provider (step 207). The service activation command may comprise the service-related data (notably the identification data (for identifying the selected service) and/or the one or more service options). Furthermore, the service activation command typically comprises the sharing URL for the creation of the shared digital key 161. The management server 190 may be configured to manage the provision of the vehicle-related service, e.g. in conjunction with one or more service servers 160.

The management server 190 may verify the service activation command. Furthermore (subject to the successful verification), the management server 190 may send a service activation request to the service server 160, in order to request provision of the shared digital key 161 for providing the vehicle-related service (step 208). The service activation request may comprise the service-related data and the sharing URL for the shared digital key 161.

The service server 160 may verify the service activation request, and subject to a successful verification, the sharing URL may be invoked by the service server 160. As a result of this, the digital key device 110 (notably the secure element 116 of the digital key device 110) and the service server 160 are aware of the sharing URL at the relay server for executing the sharing process for providing the shared digital key 161 (along with the attestation 162) to the service server 160. The service server 160 may inform the management server 190 that the sharing URL has been successfully invoked (step 209). This information may then be passed on to the digital key device 110 (step 210).

Subject to being informed that the sharing URL for providing the shared digital key 161 has been confirmed and/or invoked by the service server 160, a first part of the sharing process may be performed between the digital key device 110, the service server 160 and/or the vehicle server 140 (step 210). In particular, the shared digital key 161 may be created (by the service server 160 and/or by the vehicle server 140 and/or by the digital key device 110). Furthermore, a key certificate for the shared digital key 161 may be generated (by the service server 160 and/or by the vehicle server 140 and/or by the digital key device 110). The key certificate may comprise data regarding
- the identity of the service (for which the shared digital key 161 is to be used);
- the identity of the service provider (that provides the service for which the shared digital key 161 is to be used); and/or
- possibly the one or more service options.

Hence, the key certificate may comprise identification data with regards to the identity of the vehicle-related service and/or with regards to the identity of the service provider. This identification data may be referred to as second identification data (whereas the identification data that has been provided to the vehicle server 140 within the sharing request may be referred to as first identification data).

The key certificate may be provided to the vehicle server 140 (step 211). The vehicle server 140 may be configured to extract the second identification data from the key certificate. Furthermore, the vehicle server 140 may be configured to verify whether the second identification data matches the first identification data (that had been provided to the vehicle server 140 within the (pre-) sharing request, directly from the digital key device 110).

If the second identification data matches the first identification data (notably with respect to the identity of the service provider, the identity of the vehicle-related service and/or the one or more service options), the key sharing process may be continued (step 212). On the other hand, the key sharing process may be aborted.

As a result of the key sharing process, the service server 160 becomes a SBFD that may be enabled to share the shared digital key 161 with one or more other entities, notably one or more service devices 180 to provide the vehicle-related service. It should be noted that the service server 160 may be implemented as part of the vehicle server 140.

The key sharing process may be performed in accordance with the CCC-TS-101 specification (e.g., release 3, release 4 or higher), notably in accordance with chapter 11 of the CCC-TS-101 specification. This specification is incorporated herein by reference in its entirety.

Hence, a key sharing process to a service server 160 (of a service provider) is described, in order to create a SBFD. The key sharing process comprises a sharing target verification for cross platform key sharing (using a relay server).

The process shown in Fig. 2 comprises a service selection part, which enables a user 170 to select a service within the software application 118 of the manufacturer of the vehicle 100 and/or of the service provider. The service may be selected and/or defined using a selection from a (pre-defined) service catalogue and/or the service may be selected and/or defined based on a user interface flow (e.g. the booking of a vehicle service at the preferred dealership) along with one or more service-specific options (which may be provided as service activation options). An example service may be a maintenance service at a particular maintenance shop.

Subsequent to selecting and/or defining the service (steps 201, 202), a CCC sharing URL may be obtained. For this purpose, the software application 118 may pass the service information (i.e., the service-related data) to the device 110 (notably to the secure element 116 of the device 110) to request a sharing URL. The service-related data (notably the identification data) may comprise
- a ServiceProviderId (e.g., a unique CCC-specific identifier for a service provider);
- a ServiceId (optional, in case the service provider offers multiple different services); and/or
- one or more Service Activation Options (optional, depending on the service).

The information that was provided to the device 110 (notably to the secure element 116) in order to prepare the key sharing (ServiceProviderId, optional ServiceId, optional Service Activation Options) may be sent to the vehicle server 140 of the vehicle 100 that is related to the digital key 111 which is being shared (within a preShare command) (step 205). The vehicle server 140 may store this information (e.g. as first identification data) and may later use this information to verify whether or not the sharing URL was invoked by the correct entity (notably by the correct service server 160). By doing this, a binding of the sharing target may be achieved.

For service activation, the software application 118 may forward the sharing URL along with the ServiceProviderId, the (optional) ServiceId and/or the (optional) Service Activation Options to the target service provider, i.e. to the management server 190 of the service provider (step 207). In order to create a SBFD, the service provider (i.e., the management server 190) initiates the key sharing with the sharing URL, e.g. in accordance to the CCC cross platform key sharing protocol (as specified in (chapter 11) of the above mentioned CCC specification).

The service provider that created the SBFD (i.e. the service server 160) may call the trackKey command on the related vehicle server 140 (step 211). The vehicle server 140 may then verify the certificate chain within the key certificate provided by the service provider (i.e., provided by the service server 160). In particular, it may be verified, whether or not the certificate chain of the key certificate is valid for the server endpoint that is sending the data (e.g., in order to identify a possible attack). Alternatively, or in addition, it may be verified, whether or not the ServiceProviderId received in the preShare command matches the ServiceProviderId in the SBFD Key Server Certificate (notably within the extension of the certificate). Furthermore, if the ServiceId was provided within the preShare command, it may be verified whether this ServiceId matches the ServiceId in the SBFD Key Server Certificate. Furthermore, if one or more Service Activation Options were provided in the preShare command, it may be verified whether these one or more Service Activation Options match the one or more Service Activation Options in the SBFD Key Server Certificate.

Key sharing to a service server 160 may be used to perform a service activation for one or more different purposes. By way of example, a service activation may be performed to a dealership, to a repair shop, to a cleaning service, etc., in order to enable one or more key sharings to one or more service devices 180 of a person that has to work on the vehicle 100. A service activation may be performed to a car sharing service to allow members of the (possibly private) car sharing group to book the vehicle and to receive a key sharing from the service server 160 for the booked period.

By enabling the digital key device 110 to provide identification data to the vehicle server 140 in preparation of a service activation request to a service server 160, the vehicle server 140 is enabled to ensure that the shared digital key 161 for a digital key-based service is provided to the service server 160 of the service provider that has been selected by the user 170. Hence, a reliable and secure activation of a vehicle-related service may be achieved.

In order to further increase the safety of the activation of a digital key-based service, the selection of a service provider and/or of a service may be restricted to a set of certified service providers and/or certified services. The digital key device 110 may be configured to present a set (notably a catalogue) of one or more service provides and/or services to the user 170 (via the user interface of the digital key device 110) that have been certified by a certification entity (e.g., by the manufacturer of the vehicle 100). The certification entity (which may be referred to the root certificate authority (CA)) may hold a root certificate which comprises a digital signature that has been signed using the private key of the root CA. The root certificate comprises the public key of the root CA which enables a third party to verify the authenticity of digital signatures that have been generated using the private key of the root CA.

Along a chain of trust, subordinate certificates for subordinate CAs may be generated starting from the root certificate of the root CA. The certified service providers and/or services may each be associated with a respective subordinate (service) certificate, wherein authenticity of the respective subordinate certificates may be verified using the certificates chain (and the respective public keys) up to the root certificate. The root certificate may be held by the manufacturer of the vehicle 100.

The digital key device 110 may be configured to verify the (service) certificates of the service providers and/or the services that are comprised within the list of service providers and/or services. In particular, the (service) certificate of the service provider and/or the service may be verified, which has been selected by the user 170 (within steps 201, 202).

Furthermore, the digital key device 110 may be configured to include the (service) certificate of the selected service provider and/or service into the (first) identification data which is provided to the vehicle server 140. The vehicle server 140 may be configured to verify the authenticity of the selected service provider and/or service based on the (service) certificate that is comprised within the (first) identification data. Subject to a successful verification, positive feedback may be given to the digital key device 110 (step 206).

Subject to the service activation request from the digital key device 110, the service server 160 (of the selected service provide and/or for the selected service) may include the (service) certificate of the selected service provider and/or service into the (second) identification data which is provided to the vehicle server 140 (e.g. within step 210). As outlined above, the (second) identification data may be included in the key certificate of the shared digital key 161 that has been created for providing the SBFD for the digital key-based service.

The vehicle server 140 may verify the authenticity of the service certificate which is provided within the (second) identification data. Furthermore, it may be verified whether or not the service certificate from the (second) identification data corresponds to the service certificate that had been provided within the (first) identification data. By making use of a list of certified service providers and/or services, a digital key-based service may be set up in a particularly reliable and secure manner.

Hence, service selection may be performed by selecting a service from a certified service catalogue, wherein the catalogue may be provided natively on the digital key device 110, or within the software application 118. Each service in the catalogue is considered to be certified, which allows the device 110 to verify the data. The device 110 may (natively) verify the service activation information based on the service's certificate chain and may show the information to the user 170. By this, it can be prevented that a hacked software application 118 shows a service A but requests the activation for a different service B. Once the user 170 confirms the service activation, the key sharing may be prepared (as outlined in the context of Fig. 2).

Furthermore, the vehicle server 140 may verify the certificate chain of the service certificate that is provided by the service provider. In particular, it may be verified, whether or not the certificate chain is valid for the server endpoint (i.e. for the service server 160) that is sending the data. Furthermore, it may be verified whether or not the ServiceProviderId received within the preShare command matches the ServiceProviderld in the (extension of the) SBFD Key Server Certificate.

Fig. 3a shows a flow chart of an example method 300 for performing service activation for a digital key-based service for a vehicle 100 using a digital key 111 which is adapted for authentication at the vehicle 100. The method 300 may be executed by a (handheld and/or electronic) digital key device 110, such as a smartphone. The digital key 111 may be a CCC digital key, according to the CCC Digital Key Standard, Release 3, Release 4 or higher.

The method 300 comprises determining 301 identification data regarding the identity of the service provider for the digital key-based service for the vehicle 100. The identification data may be determined based on one or more user inputs of a user 170 (of the digital key device 110). The identification data may comprise and/or may be indicative of
- an identifier of the service provider;
- an identifier of the digital key-based service;
- one or more (selected) options (notably service activation options) of the digital key-based service; and/or
- a digital (service) certificate of the service provider and/or of the service (which is part of a certificate chain).

The method 300 further comprises providing 302 the identification data directly to a vehicle server 140 which is configured to track one or more shared digital keys 161 that have been derived from the digital key 111 of the digital key device 110. The vehicle server 140 may be associated with the vehicle 100. Furthermore, the digital key device 110 may be paired with the vehicle server 140 (based on an owner pairing process according to the CCC-TS-101 specification (e.g., release 3, release 4 or higher), notably according to chapter 6 of the CCC-TS-101 specification.

Furthermore, the method 300 comprises sending 303 a service activation request to a service server 160 for providing the digital key-based service using a shared digital key 161 that is derived from the digital key 111 of the digital key device 110, wherein the shared digital key 161 is adapted for authentication at the vehicle 100, and wherein the service activation request comprises the identification data. The identification data may be comprised within a key certificate of the shared digital key 161. Subsequent to key sharing, the service server 160 may be a SBFD according to the CCC-TS-101 specification.

Hence, a method 300 is described within which identification data for the service provider is provided multiple times to the vehicle server 140 (directly from the digital key device 100 that initiates service activation of the service, and from the service server 160 that is to be provided with a shared digital key 161 for providing the service). As a result of this, a particularly reliable and secure setup of a digital key-based and vehicle related service may be performed.

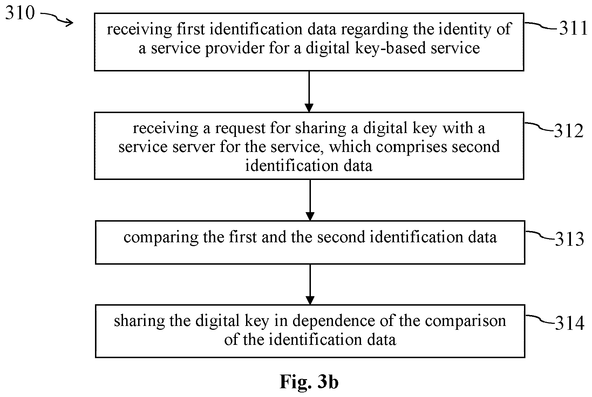

Fig. 3b shows a flow chart of another example method 310 for performing service activation for a digital key-based service for a vehicle 100 using a digital key 111 which is adapted for authentication at the vehicle 100. The method 310 may be executed by a vehicle server 140 which is associated with the vehicle 100 and/or with the digital key 111.

The method 310 comprises receiving 311 first identification data regarding the identity of the service provider for the digital key-based service for the vehicle 100. The first identification data may be received directly from the digital key device 110 that holds the digital key 111 (and which is typically paired with the vehicle 100 and/or the vehicle server 140).

Furthermore, the method 310 comprises, subsequent to receiving 311 the first identification data, receiving 312 a request for provision of a shared digital key 161 derived from the digital key 111 to the service server 160 for providing the digital key-based service, wherein the request comprises second identification data regarding the identity of the service provider for the digital key-based service. In particular a (CCC) service activation request may be received. The request may be received by the service server 160. The service server 160 may become a SBFD (according to the CCC specification), upon receiving the shared digital key 161, thereby enabling the service server 160 to provide one or more shared digital keys 181 to one or more service devices 180, wherein the one or more shared digital keys 181 are based on the shared digital key 161. The second identification data may be comprised within the key certificate of the shared digital key 161 of the service server 160 (e.g. the SBFD).

The first and/or second identification data may comprise and/or may be indicative of
- an identifier of the service provider;
- an identifier of the digital key-based service;
- one or more (selected) options (notably service activation options) of the digital key-based service; and/or
- a digital (service) certificate of the service provider and/or of the service (which is part of a certificate chain).

The method 310 further comprises comparing 313 the first identification data and the second identification data. In particular, it may be verified whether or not the first identification data and the second identification data are indicative of
- the same service provider;
- the same digital key-based service; and/or
- the same one or more options of the digital key-based service.

In addition, the method 310 comprises enabling 314 the provision of the shared digital key 161 to the service server 160 in dependence of the comparison of the first identification data and the second identification data. In particular, the provision of the shared digital key 161 to the service server 160 (for creating a SBFD) may be enabled (only) if the first identification data and the second identification data are indicative of
- the same service provider;
- the same digital key-based service; and/or
- the same one or more options of the digital key-based service.

By making the provision of the shared digital key 161 subject to the comparison and/or the verification of first and second identification data with regards to the identity of the service provider, a digital key-based service can be established in a particularly reliable and secure manner.

Hence, a digital key device 110 comprising a digital key 111 which is adapted for authentication of the digital key device 110 at a vehicle 100 is described. The digital key device 110 is configured to determine identification data regarding the identity of a service provider for a digital key-based service for the vehicle 100. The digital key device 110 is configured to determine the identification data based on one or more user inputs of a user 170 at a user interface of the digital key device 110. The user interface may be provided by a software application 118 which is executed on the digital key device 110.

The identification data may be indicative of and/or may comprise an identifier for the service provider out of a plurality of different identifiers for a corresponding plurality of different service providers. Alternatively, or in addition, the identification data may be indicative of and/or may comprise a (digital) service certificate of the service provider, wherein the service certificate is typically part of a certificate chain originating at a root certificate (provided by a trusted entity).

Alternatively, or in addition, the identification data may be indicative of and/or may comprise
- a service identifier for the digital key-based service which is to be provided, out of a plurality of different service identifiers for a corresponding plurality of different digital key-based services; and/or
- one or more options (notably service activation options) for the digital key-based service which is to be provided.

The digital key device 110 may be configured to determine a set of different service providers. The set of service provider may e.g. be provided by a server (e.g. the service server 160) which tracks the different service providers that are entitled to provide a service for the vehicle 100. The set of service providers may be limited to service providers having a service certificate (issued by the entrusted entity using the root certificate).

The digital key device 110 may be configured to output the set of different service providers via the user interface of the digital key device 110, and to capture a user input at the user interface, wherein the user input is indicative of a selected service provider from the set of different service providers (which has been selected by the user 170). The digital key device 110 may then determine the identification data for the selected service provider.

Hence, the digital key device 110 may allow the user 170 of the device 110 to select a service provider and/or a service using the user interface of the device 110.

The digital key device 110 is configured to provide the identification data directly to the vehicle server 140 which is configured to track one or more shared digital keys 161 that have been derived from the digital key 111 of the digital key device 110. The vehicle server 140 may verify and/or store the identification data. In particular, the digital key device 110 may be configured to send the identification data directly to the vehicle server 140 using a preShare command according to the Car Connectivity Consortium (CCC) Standard release 3, release 4 or higher.

Furthermore, the digital key device 110 is configured to send a service activation request to a service server 160 for providing the digital key-based service using a shared digital key 161 that is derived from the digital key 111 of the digital key device 110, wherein the shared digital key 161 is adapted for authentication at the vehicle 100. The service activation request comprises the identification data (e.g., as part of the key certificate of the shared digital key 161). The digital key device 110 may be configured to send the identification data to the service server 160 within a Service Activation command according to the CCC Standard release 3, release 4 or higher.

Hence, the digital key device 110 may directly inform the vehicle server 140 in advance about the service provider that is to provide the digital key-based service. As a result of this, the vehicle server 140 is enabled to verify during the service activation process whether the shared digital key 161 is provided to the correct service provider. As a result of this, a particular reliable and secure setup of a SBFD for a digital key-based service is enabled.

The digital key device 110 may be configured to sign the identification data using the digital key 111, in particular using the private key of the digital key 111. Furthermore, the digital key device 110 may be configured to provide the signed identification data directly to the vehicle server 140 and/or provide the signed identification data within the service activation request. By doing this, the security of the setup process may be further increased.

Furthermore, a vehicle server 140 for managing one or more shared digital keys 161 that are derived from the digital key 111 of a digital key device 110 is described, wherein the digital key 111 and the one or more shared digital keys 161 are adapted for authentication (a device 110, 180 and/or a server 160) at a vehicle 100.

The vehicle server 140 is configured to receive first identification data regarding the identity of the service provider for a digital key-based service for the vehicle 100 directly from the digital key device 110. The first identification data may be received within a CCC preShare command.

Furthermore, the vehicle server 140 is configured to receive a request for provision of a shared digital key 161 to a service server 160 for providing the digital key-based service, wherein the request comprises second identification data regarding the identity of the service provider for the digital key-based service. The second identification data may be received within a (CCC) service activation command. The second identification data may be comprised within the key certificate of the shared digital key 161. The vehicle server 140 may be configured to extract the second identification data from the key certificate of the shared digital key 161.

The vehicle server 140 is further configured to compare the first identification data with the second identification data. The first identification data and the second identification data may each comprise and/or may each be indicative of the service certificate of the service provider. The vehicle server 140 may be configured to compare the service certificate of the first identification data with the service certificate of the second identification data. In particular, the vehicle server 140 may be configured to determine whether or not the service certificate of the first identification data and the service certificate of the second identification data indicate the same service provider.

Alternatively, of in addition, the first identification data and the second identification data may each comprise and/or may each be indicative of the identifier of the service provider out of a plurality of different identifiers for a corresponding plurality of different service providers. The vehicle server 140 may be configured to determine whether or not the identifier of the first identification data and the identifier of the second identification data indicate the same service provider.

Furthermore, the vehicle server 140 may be configured to enable the provision of the shared digital key 161 to the service server 160 in dependence of the comparison of the first identification data and the second identification data. In particular, the provision of the shared digital key 161 may be enabled (only) if the first identification data and the second identification data are indicative of the same service provider. As a result of this, a particularly reliable and secure service activation of a digital key-based service may be achieved.

The first identification data and the second identification data may each comprise and/or may each be indicative of
- a service identifier for the digital key-based service which is to be provided, out of a plurality of different service identifiers for a corresponding plurality of different digital key-based services; and/or
- one or more options (notably service activation options) for the digital key-based service which is to be provided.

The vehicle server 140 may be configured to enable the provision of the shared digital key 161 to the service server 160 (possibly only) if
- the service identifiers for the digital key-based service of the first and the second identification data match; and/or
- one or more options for the digital key-based service of the first and the second identification data match.

By doing this, the reliability and the security for setting up the digital key-based service may be increased further.

As indicated above, the first identification data may comprise a service certificate of the service provider. The vehicle server 140 may be configured to verify whether or not the service certificate is part of a certificate chain that originates at a pre-determined root certificate. In addition, the vehicle server 140 may be configured to enable the provision of the shared digital key 161 to the service server 160 in dependence on whether or not the service certificate is part of a certificate chain that originates at the pre-determined root certificate. In particular, the provision of the shared digital key 161 to the service server 160 may be enabled (only) if it is confirmed that the service certificate is part of a certificate chain that originates at the pre-determined root certificate, thereby further increasing the reliability and the security for setting up the digital key-based service.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A digital key device (110) comprising a digital key (111) which is adapted for authentication of the digital key device (110) at a vehicle (100); wherein the digital key device (110) is configured to
- determine identification data regarding the identity of a service provider for a digital key-based service for the vehicle (100);
- provide the identification data directly to a vehicle server (140) which is configured to track one or more shared digital keys (161) that have been derived from the digital key (111) of the digital key device (110); and
- send a service activation request to a service server (160) for providing the digital key-based service using a shared digital key (161) that is derived from the digital key (111) of the digital key device (110); wherein the shared digital key (161) is adapted for authentication at the vehicle (100); wherein the service activation request comprises the identification data.

2. The digital key device (110) of claim 1, wherein the identification data is indicative of and/or comprises an identifier for the service provider out of a plurality of different identifiers for a corresponding plurality of different service providers.

3. The digital key device (110) of any previous claim, wherein
- the identification data is indicative of and/or comprises a service certificate of the service provider; and
- the service certificate is a part of a certificate chain originating at a root certificate.

4. The digital key device (110) of any previous claim, wherein the identification data is indicative of and/or comprises
- a service identifier for the digital key-based service which is to be provided, out of a plurality of different service identifiers for a corresponding plurality of different digital key-based services; and/or
- one or more options for the digital key-based service which is to be provided.

5. The digital key device (110) of any previous claim, wherein the digital key device (110) is configured to
- sign the identification data using the digital key (111), in particular using a private key of the digital key (111);
- provide the signed identification data directly to the vehicle server (140) and/or provide the signed identification data within the service activation request.

6. The digital key device (110) of any previous claim, wherein the digital key device (110) is configured to determine the identification data based on one or more user inputs of a user (170) at a user interface of the digital key device (110).

7. The digital key device (110) of claim 6, wherein the digital key device (110) is configured to
- determine a set of different service providers;
- output the set of different service providers via the user interface;
- capture a user input at the user interface, which is indicative of a selected service provider from the set of different service providers; and
- determine the identification data for the selected service provider.

8. The digital key device (110) of any previous claim, wherein the digital key device (110) is configured to
- send the identification data directly to the vehicle server (140) using a preShare command according to the Car Connectivity Consortium, CCC, Standard release 3, release 4 or higher; and/or
- send the identification data to the service server (160) within a Service Activation command according to the CCC Standard release 3, release 4 or higher.

9. A vehicle server (140) for managing one or more shared digital keys (161) that are derived from a digital key (111) of a digital key device (110); wherein the digital key (111) and the one or more shared digital keys (161) are adapted for authentication at a vehicle (100); wherein the vehicle server (140) is configured to
- receive first identification data regarding the identity of a service provider for a digital key-based service for the vehicle (100) directly from the digital key device (110);
- receive a request for provision of a shared digital key (161) to a service server (160) for providing the digital key-based service; wherein the request comprises second identification data regarding the identity of the service provider for the digital key-based service;
- compare the first identification data and the second identification data; and
- enable the provision of the shared digital key (161) to the service server (160) in dependence of the comparison of the first identification data and the second identification data, in particular if the first identification data and the second identification data are indicative of the same service provider.

10. The vehicle server (140) of claim 9, wherein
- the first identification data comprises a service certificate of the service provider; and
- the vehicle server (140) is configured to verify whether or not the service certificate is part of a certificate chain that originates at a pre-determined root certificate; and
- enable the provision of the shared digital key (161) to the service server (160) in dependence on whether or not the service certificate is part of a certificate chain that originates at the pre-determined root certificate.

11. The vehicle server (140) of any of claims 9 to 10, wherein
- the first identification data and the second identification data each comprise and/or each are indicative of a service certificate of the service provider;
- the vehicle server (140) is configured to compare the service certificate of the first identification data with the service certificate of the second identification data; and
- in particular, the vehicle server (140) is configured to determine whether or not the service certificate of the first identification data and the service certificate of the second identification data indicate the same service provider.

12. The vehicle server (140) of any of claims 9 to 11, wherein
- the first identification data and the second identification data each comprise and/or each are indicative of an identifier of the service provider out of a plurality of different identifiers for a corresponding plurality of different service providers; and
- the vehicle server (140) is configured to determine whether or not the identifier of the first identification data and the identifier of the second identification data indicate the same service provider.

13. The vehicle server (140) of any of claims 9 to 12, wherein
- the first identification data and the second identification data each comprise and/or each are indicative of
- a service identifier for the digital key-based service which is to be provided, out of a plurality of different service identifiers for a corresponding plurality of different digital key-based services; and/or
- one or more options for the digital key-based service which is to be provided; and
- the vehicle server (140) is configured to enable the provision of the shared digital key (161) to the service server (160) if
- the service identifiers for the digital key-based service of the first and the second identification data match; and/or
- one or more options for the digital key-based service of the first and the second identification data match.

14. A method (300) for performing service activation for a digital key-based service for a vehicle (100) using a digital key (111) which is adapted for authentication at the vehicle (100); wherein the method (300) comprises
- determining (301) identification data regarding the identity of a service provider for the digital key-based service for the vehicle (100);
- providing (302) the identification data directly to a vehicle server (140) which is configured to track one or more shared digital keys (161) that have been derived from the digital key (111) of the digital key device (110); and
- sending (303) a service activation request to a service server (160) for providing the digital key-based service using a shared digital key (161) that is derived from the digital key (111) of the digital key device (110); wherein the shared digital key (161) is adapted for authentication at the vehicle (100); wherein the service activation request comprises the identification data.

15. A method (310) for performing service activation for a digital key-based service for a vehicle (100) using a digital key (111) which is adapted for authentication at the vehicle (100); wherein the method (310) comprises
- receiving (311) first identification data regarding the identity of a service provider for the digital key-based service for the vehicle (100);
- subsequent to receiving (311) the first identification data, receiving (312) a request for provision of a shared digital key (161) derived from the digital key (111) to a service server (160) for providing the digital key-based service; wherein the request comprises second identification data regarding the identity of the service provider for the digital key-based service;
- comparing (313) the first identification data and the second identification data; and
- enabling (314) the provision of the shared digital key (161) to the service server (160) in dependence of the comparison of the first identification data and the second identification data, in particular if the first identification data and the second identification data are indicative of the same service provider.
